# EUROPEAN PATENT APPLICATION

(11) **EP 2 003 551 A1**
(43) Date of publication of application: **17.12.2008**
(21) Application number: 08157613.4
(22) Date of filing: 04.06.2008
(51) Int. Cl.: G06F 9/445

(54) **Tessellated applications for user computing environments**

(30) Priority: 11.06.2007 US 811546
(71) Applicant: Novell, Inc., Provo, Utah 84606-6169 (US)
(72) Inventor: Carter, Stephen R, Spanish Fork, UT 84660 (US)
(74) Representative: Hanna, Peter William Derek

(57) **Abstract**

A computing policy establishes computing rights of multiple users according to their roles, such as workplace job descriptions. Templates (30-1, 30-2), in a library (112), each define a computing configuration (32,34,36) of at least one virtual machine (30) and any computing application to be executed by the virtual machine. A plurality of user applications (100) are defined and configured from the templates and each corresponds to one or more roles of the users. Users select from the applications, according to their role. In this manner, policy or governance can be enforced and/or computing resources conserved. Various other features relate to: tessellating the applications from the templates; loading (136) and configuring startup conditions of the applications; and mapping the applications to user viewing areas, such as a viewing boundary (142) of a monitor or a virtual viewing area (140) within the viewing boundary. Libraries (120), managers (110, 114), software program products, and policy management are other features, to name a few.

## Description

### FIELD OF THE INVENTION

Generally, the present invention relates to computing system environments contemplative of virtual machines assembled to achieve common computing goals, such as providing various computing applications to users in an entity, e.g., email, photo-editing, word processing, etc. Particularly, it relates to user computing applications based on user roles, e.g., workplace job descriptions, according to established policy defining computing rights per the roles. In this regard, tessellated applications from defined computing templates establish the user applications so as to enforce policy or governance and/or computing resource availability. Various features contemplate loading and startup conditions of the applications and mapping viewing areas according to the applications. Libraries, managers, and software program products are other noteworthy features.

### BACKGROUND OF THE INVENTION

Multiple cores in computing devices are rapidly emerging as a modem computing paradigm. However, dual-core and recent quad-core systems in a single device involve parallel programming which, to date, has been known to cause problems. For example, separate tasks have regularly needed shared memory caches for accessing data. When one task is accessing memory, and the other needs access to the same memory, a system crash can occur if proper safeguards are not put in place. While this is but one problem, it typifies the nature of parallel programming. Consider further that this problem compounds itself as cores increase in size from two and four to eight, sixteen, thirty-two or more. Imagine further the problem of complication as entities have thousands of employees, each with a dedicated computing device having multiple cores or multiple devices acting together for a common purpose, with or without multiple cores. Regulatory pressures will also mount as new products and programming techniques emerge.

Accordingly, a need exists in the art of user computing environments to better program to multiple cores. The need further contemplates a paradigm of assemblies of computing devices acting collectively as a multiple core, with or without each having multiple cores. In turn, the paradigm needs robustness to support limited services, such as temporary or fleeting services, but without unduly complicating the application. As with many modem paradigms, such should also embrace governance scenarios and user identity awareness, while simultaneously enabling flexibility, integration with multiple applications and evolving technologies. Device monitoring and noticing capabilities are other noteworthy goals, to name a few. Naturally, any improvements along such lines should further contemplate good engineering practices, such as relative inexpensiveness, stability, ease of implementation, low complexity, security, unobtrusiveness, etc.

### SUMMARY OF THE INVENTION

The present invention provides methods, programs and systems for of instantiating a computing environment for a user, in accordance with claims which follow. The above-mentioned and other problems become solved by applying the principles and teachings associated with the hereinafter-described tessellated applications for user computing environments. In a departure from traditional assemblies of computing arrangements, tessellated applications contemplate an entirety of its individual components (e.g., virtual machines) when addressing computing goals and concerns, not just individual components. As its name implies, tessellation provides an arrangement of applications having essentially no overlap or gaps in functionality which together serve the common computing goal, such as one or more user applications.

In a representative embodiment, a computing policy establishes the computing rights of multiple users according to their roles in an entity, such as roles defined by workplace job descriptions. Templates, in a library, each define a computing configuration of at least one virtual machine and any application to be executed by the virtual machine. A plurality of user applications are defined and configured from the templates and each application corresponds to one or more roles of the users. In a user computing environment, the users select from the applications which may or may not have mutual exclusivity of templates. In this manner, policy or governance can be enforced on users and/or computing resources conserved. Various other features relate to: tessellating the applications from the templates; setting loading and startup conditions of the applications; and mapping viewing areas according to the applications.

Representatively, tessellation occurs according to automatic configuration by a tessellation manager interrogating various job descriptions (e.g., one employee of the entity may have the role of engineer while another has the role of graphic artist). Loading and startup relates to whether applications begin automatically, which ones begin, whether they require user input, and how this relates to other virtual or physical computing devices and whether they are loaded or started or not. Mapping contemplates mapping to a physical viewing boundary of a monitor or a virtual viewing area within the viewing boundary, for instance. Libraries, managers, and policy management are some other features. Still other embodiments contemplate computer program products with executable instructions, available as a download or on a computer-readable media, for implementing some or all of the foregoing on one or more physical computing devices.

These and other embodiments, aspects, advantages, and features of the present invention will be set forth in the description which follows, and in part will become apparent to those of ordinary skill in the art by reference to the following description of the invention and referenced drawings or by practice of the invention. The aspects, advantages, and features of the invention are realized and attained by means of the instrumentalities, procedures, and combinations particularly pointed out in the appended claims.

### BRIEF DESCRIPTION OF THE DRAWINGS

The accompanying drawings incorporated in and forming a part of the specification, illustrate several aspects of the present invention, and together with the description serve to explain the principles of the invention. In the drawings:
Figure 1 is a diagrammatic view in accordance with the present invention of representative physical devices in a computing system environment for tessellated applications for user computing environments;
Figure 2 is a diagrammatic view in accordance with the present invention of a symbol representative of a virtual machine in a computing environment;
Figure 3 is a diagrammatic view in accordance with the present invention of an assembly of multiple virtual machines in a computing environment;
Figure 4 is a diagrammatic view in accordance with the present invention of a representative tessellated application of virtual machines;
Figure 5 is a diagrammatic view in accordance with the present invention of a representative tessellation of pluralities of tessellated applications; and
Figure 6 is a combined diagrammatic view and flow chart in accordance with the present invention of tessellated applications for a user's computing environment.

### DETAILED DESCRIPTION OF THE ILLUSTRATED EMBODIMENTS

In the following detailed description of the illustrated embodiments, reference is made to the accompanying drawings that form a part hereof, and in which is shown by way of illustration, specific embodiments in which the invention may be practiced. These embodiments are described in sufficient detail to enable those skilled in the art to practice the invention and like numerals represent like details in the various figures. Also, it is to be understood that other embodiments may be utilized and that process, mechanical, electrical, arrangement, software and/or other changes may be made without departing from the scope of the present invention. In accordance with the present invention, methods and apparatus for improving user computing environments with tessellated applications are hereinafter described.

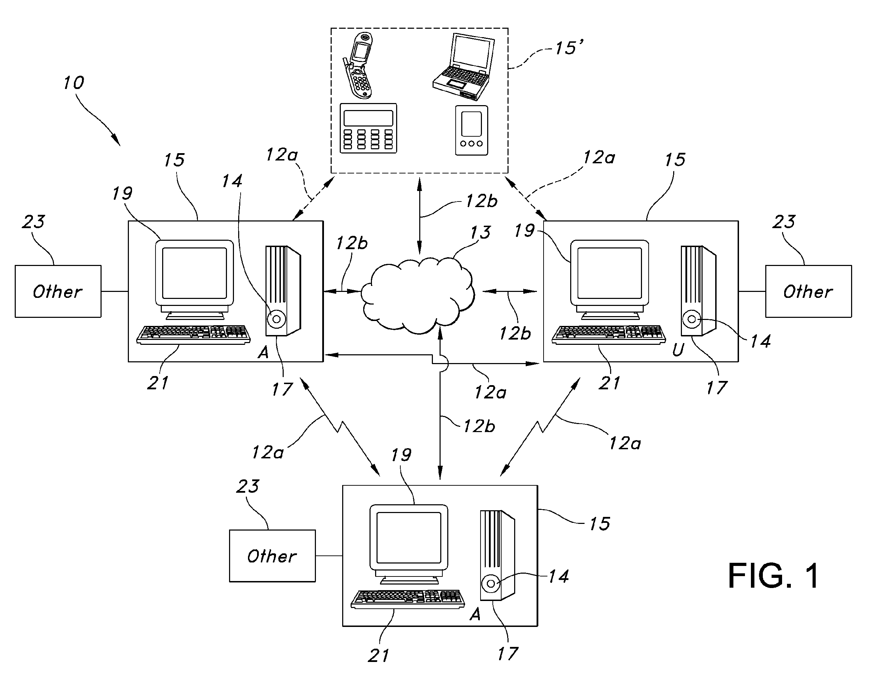

With reference to Figure 1, a representative environment 10 of physical computing devices 15 or 15' exists per each user, but their physical arrangement or type is largely irrelevant to the invention. In other words, one or more physical computing devices include one or more computing cores, or collectively work per a common computing goal, e.g., as physical or virtual machines, but the tessellated applications per a user computing environment occurs irrespective of the layout, type or usage of the physical computing devices. Nonetheless, an exemplary computing device typifies a server 17, such as a grid or blade server, or peer-to-peer arrangement, hosting applications, web functions, communications, files, etc. Alternatively, an exemplary computing device includes a general or special purpose computing device, e.g., workstation, in the form of a conventional fixed or mobile computer 17 having an attendant monitor 19 and user interface 21. The computer internally includes a processing unit for a resident operating system, such as DOS, WINDOWS, MACINTOSH, VISTA, UNIX and LINUX, to name a few, a memory, and a bus that couples various internal and external units, e.g., other 23, to one another. Representative other items 23 (also available for tessellated applications) include, but are not limited to, PDA's, cameras, scanners, printers, microphones, joy sticks, game pads, satellite dishes, hand-held devices, consumer electronics, minicomputers, computer clusters, main frame computers, a message queue, a peer machine, a broadcast antenna, a server (web, application, communication, IMAP, POP, file, etc.), an AJAX client, a grid-computing node, a peer, a virtual machine, a web service endpoint, a cellular phone, or the like. The other items may also be stand alone computing devices 15' in the environment 10.

In either, storage devices are contemplated and may be remote or local. While the line is not well defined, local storage generally has a relatively quick access time and is used to store frequently accessed data, while remote storage has a much longer access time and is used to store data that is accessed less frequently. The capacity of remote storage is also typically an order of magnitude larger than the capacity of local storage. Regardless, storage is representatively provided for aspects of the invention contemplative of computer executable instructions, e.g., code or software, as part of computer program products on readable media, e.g., disk 14 for insertion in a drive of computer 17. Computer executable instructions may also be available as a download or reside in hardware, firmware or combinations in any or all of the depicted devices 15 or 15'.

When described in the context of computer program products, it is denoted that items thereof, such as modules, routines, programs, objects, components, data structures, etc., perform particular tasks or implement particular abstract data types within various structures of the computing system which cause a certain function or group of functions. In form, the computer product can be any available media, such as RAM, ROM, EEPROM, CD-ROM, DVD, or other optical disk storage devices, magnetic disk storage devices, floppy disks, or any other medium which can be used to store the items thereof and which can be assessed in the environment.

In network, the computing devices communicate with one another via wired, wireless or combined connections 12 that are either direct 12a or indirect 12b. If direct, they typify connections within physical or network proximity (e.g., intranet). If indirect, they typify connections such as those found with the internet, satellites, radio transmissions, or the like, and are given nebulously as element 13. In this regard, other contemplated items include servers, routers, peer devices, modems, T1 lines, satellites, microwave relays or the like. The connections may also be local area networks (LAN) and/or wide area networks (WAN) that are presented by way of example and not limitation. The topology is also any of a variety, such as ring, star, bridged, cascaded, meshed, or other known or hereinafter invented arrangement.

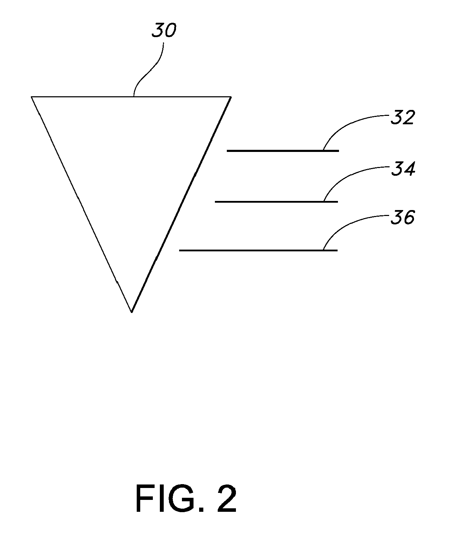

With the foregoing representative computing environment as backdrop, Figure 2 begins the illustration of tessellation. As a matter of convention, a symbol or diagram 30 in the form of an inverted triangle represents a single virtual machine. The machine may exist on or in one or more cores of the workstation of the user, collectively on or in one or more computing configurations, having one or more cores, or in any of the foregoing. The three lines 32, 34, 36 to the side of the symbol represent the configuration of the virtual machine.

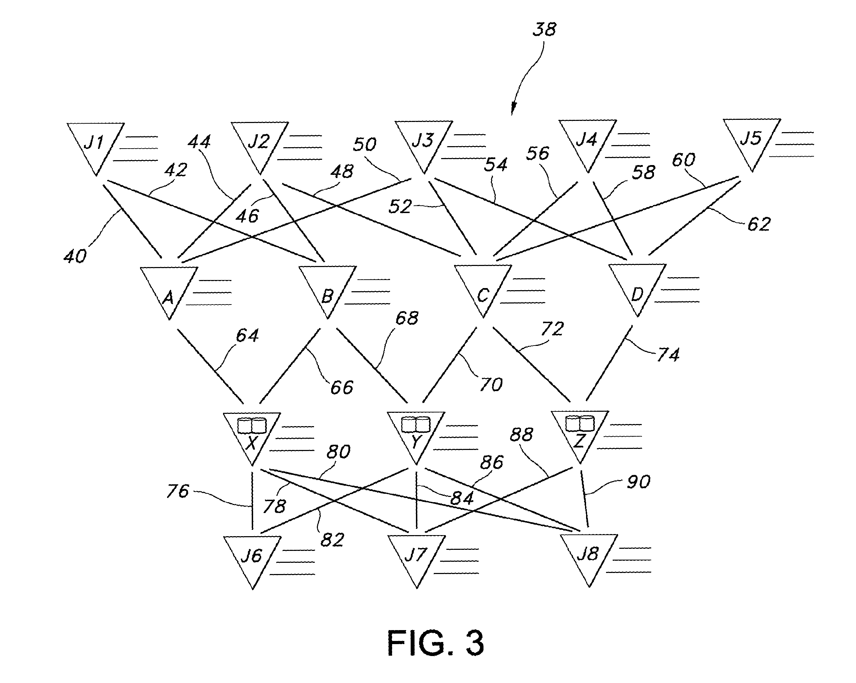

For instance, pluralities 38 of individual virtual machines 30 in Figure 3 are further labeled as J1-J8, A-D and X-Z. The configuration of any one virtual machine for achieving a common computing goal of providing an email system, for instance, might consist of the virtual machines of A, B, C, and D being configured as end-user email servers, while the virtual machines labeled X, Y, and Z are representative of email post offices. The J1 through J8 virtual machines, on the other hand, are representatively various gateways that allow the email system to work (e.g., IMAP, POP, SMTP, Apache, etc.). In turn, the configuration depends upon what role the virtual machine assumes (ultimately dictated by the computing goal objective). That is, if a virtual machine is a POP3 server, its configuration will be that attendant with POP3 functionality and skilled artisans understand its details. Similarly, if a virtual machine is an IMAP4 server, its configuration will be that attendant with IMAP4 functionality and skilled artisans also understand its details. In between the various virtual machines are direct or indirect communication lines 40, 42, 44, 46 ... 90 externally connecting the various virtual machines in some kind of communication channel that performs some function of the common computing goal, e.g., the overarching email system. (Not shown, however, are communication lines that would connect to a WAN or Internet (left out for clarity).)

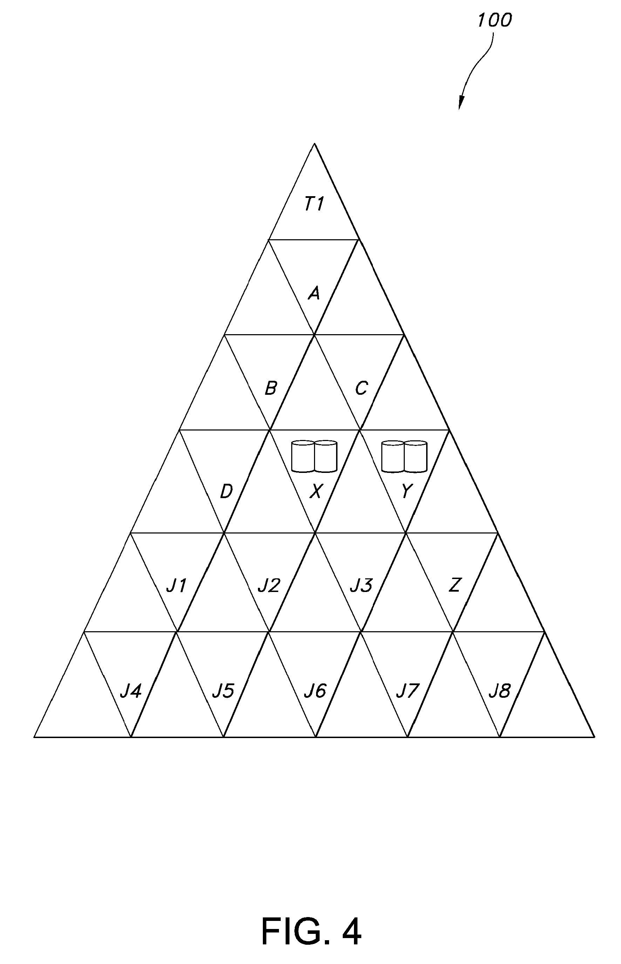

In Figure 4, a tessellation of the virtual machines for accomplishing the common computing goal exists as generic element 100. In form, it is an application bound together in its entirety that is always considered as an entirety of virtual machines, and not just its individual virtual machine components. In other words, changing only the configuration of virtual machine J3 or virtual machine B is not allowed. Instead, any change or reconfiguration to any part or component of the tessellation 100 requires that the status and functioning of the entire tessellated application be validated and certified for accomplishing the computing goal common to the entirety of virtual machines. In this manner, all of the elements or components needed to instantiate the tessellated system are held in a single application definition that can be deployed by virtual environment managers. For a further discussion on the topic, reference is made to our co-pending European Patent Application Serial No. 08154037.9, having a filing date of 3^{rd} April 2008, entitled "Tessellated Virtual Machines for Common Computing Goals". Reference is also made to our U.S. Patent Application Serial No. 11/731,062, having a filing date of 30^{th} March 2007, entitled "Tessellated Virtual Machines Conditionally Linked for Common Computing Goals". Among other things, the latter application describes the linking together of tessellated applications under various conditions.

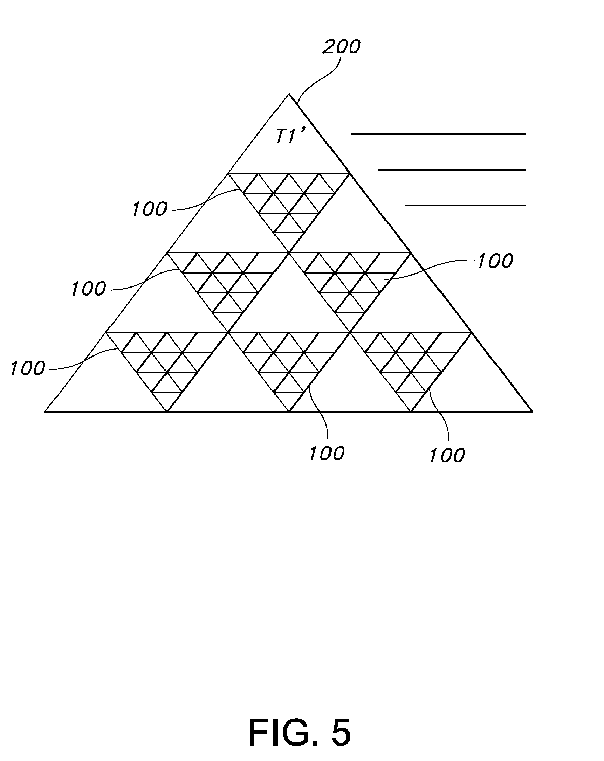

In Figure 5, the notion of allowing nested pluralities of tessellated applications is illustrated. In one embodiment, a tessellated collection 200 of tessellated applications 100 exists. In turn, the collection itself serves to undertake the accomplishing of the computing goal at hand, not just the individual applications 100. Also, the collection could reside in still another library of tessellated collections defining templates thereof that could then be fit with other tessellated collections or individually tessellated applications to achieve still other computing goals.

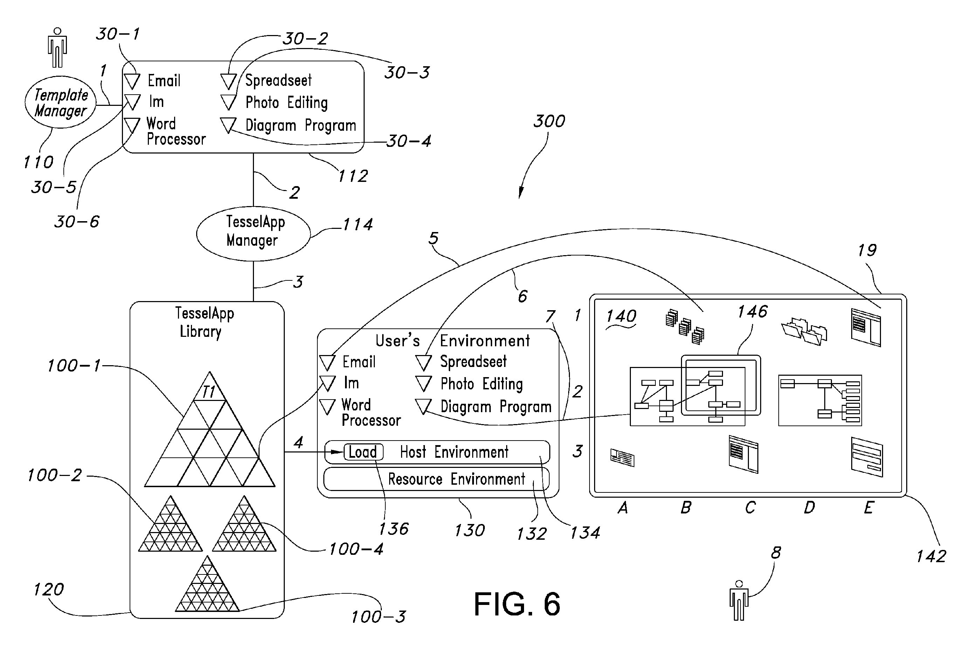

With reference to Figure 6, an overall system for tessellated applications instantiated for a user's computing environment is given generically as 300. A virtual machine template manager 110, such as a system administrator in an enterprise, defines virtual machine templates 30-x (x = 1-6) for each of the possible computing configurations of at least one virtual machine and any application to be executed by the at least one virtual machine. As before, this might consist of defining one virtual machine as a POP3 server, while defining another as an email or IMAP server. Alternatively, and more useful to a user, the templates 30 might consist of defining an email template 30-l, a spreadsheet template 30-2, a photo editing template 30-3, a diagramming program template 30-3, an instant messaging template 30-5, a word processor template 30-6 or other known or later invented useful computing applications for users. As will be seen, these are created especially according to a role of the user, such as their workplace job description, and have utility based on this role. The role is also pre-specified to a computing policy of the entity, which enforces governance of the entity on the users. Among other things, the computing policy may specify computing particulars, such as memory, firewall, etc. Also, this functionality includes defining an external connectivity with other virtual machines. Of course, it is well known how a virtual machine can be configured and associated with virtual disks and content in the virtual disk and physical disks and content in the physical disk. This template mechanism adds to that capability by allowing the definition concerning connectivity to other template definitions concerning network connectivity, SAN connectivity, iSCSI connectivity, etc. The intent then is to declare the needed connections so that each template can be fit into a tessellated application.

Once defined, the template per each virtual machine is compiled with other templates in a template library 112 at step 1. Naturally, many virtual machine templates will exist in the library and can be used for a myriad of user applications, according to role. It is also well to note that the definitions created for the template library can be done via XML or some other descriptive language and that a schema to constrain the specification of the template document is the preferred embodiment.

From here, certain of the templates are selected (step 2) from the library 112 by a tessellation manager 114. At step 3, the tessellation manager tessellates the templates according to the existing objective, e.g., defining user applications, per role. Alternatively, they are configured by the user him or herself or an information technology (IT) person at a help-desk, for example. In either, they may be automatically configured by an automated TesselApp Manager by interrogating job descriptions and their associated roles (e.g., one employee may have the role engineer, while another has a role of graphic artist; the distinction is used to select or configure automatically). Continuing the example of an email system, here the administrator concentrates modeling using the templates and external connectivity specifications of IMAP servers, POP servers, etc. Alternatively, and more particular to typical user applications, the administrator defines a first tessellated application 100-1 as a photo-editing application and does so for a user, such as a company photographer. A second tessellated application 100-2 may be an accounting program for a user in a role such as company accountant. Similarly, tessellated applications 100-3, 100-4 are formed or created for users according to their roles, according to computing policy.

Also, the tessellated applications 100 can be stored in a tessellation application library 120. Intuitively, the applications may have common templates, such as all users may have an email template 30-1, or may be entirely uncommon in assembly. Applications may also come and go over time, or be updated/re-arranged over time according to need. It may also be the situation that only a single application will be run within a virtual machine (it is well to note that this minimalist approach increases the security level of the virtual machine environment because only services specific to the single application are loaded, thus reducing the attack surface). In another embodiment, there could be several applications running in a virtual machine.

From here, a user's environment 130 consists of a Resource Environment 132 (e.g., the physical computer hardware, disk drives, display mechanism, keyboard, as in Figure 1) and a Host Environment 134 (e.g., an operating system that will host the guest systems in the virtual machines). The Host Environment has a "Load" function 136 that automatically loads a specified tessellated application when it is started.

In a representative embodiment, when a user starts his workstation (e.g., desktop or laptop), a pre-configured or pre-selected tessellated application is started by the "Load" function (via step 4), and the user has a complete environment to work with. Note that the environment specified by the tessellated application may have all applications pre-configured in the virtual machine, complete with needed configurations and data and, thus, the application is fully functional when it is started (e.g., the email program is running and displaying the inbox). In another embodiment, the virtual machine is loaded but not started and requires user input to start it, such as by selecting a visually-displayed icon. In still another embodiment, some virtual machines are started automatically while others require user input. Still another embodiment contemplates conditionally linking various tessellated applications, as in the latter incorporated-by-reference document, to provide the function of starting select virtual machines only if other virtual machines are started (e.g., IM is not started unless email is started).

As before, part of the virtual machine configuration may be policy driven to specify how the Resource Environment is to be used (e.g., how many CPUs the virtual machine may use or have an affinity binding to, how much memory, how much disk, etc.). Other considerations include loading tessellated application by managed policy such that temporal, spacial, network, etc. conditions may dictate which tessellated application should be loaded (e.g., a specific application may not be run outside of a firewall). In another embodiment, an already-loaded tessellated application may be overridden by the instantiation of another tessellated application because of some computing policy statement (e.g., it is after 5:00 PM and a certain virtual machines in the finance department may no longer be run). Naturally, skilled artisans will be able to contemplate others.

With reference to visual appearance, one or more tessellated application may be mapped or configured to specify the visual location of the output of each virtual machine. Representatively, steps 5, 6 and 7 show mapping to the grid labeled A, B, C, D, E by 1, 2, 3. The viewing area 140 of the grid may be bound to a physical limitation (e.g., a viewing boundary 142, e.g., 1024x768 screen of monitor 19) or a virtual viewing area within the viewing boundary (e.g., the XGL spinning cube in Novell, Inc.'s SLED 10 or a large virtual viewing area that uses one or more physical display devices as a viewport for viewing). In one embodiment, the visual location is configured by the enterprise help-desk, while in another embodiment it is configured by the user. In still another, the viewing location is pre-configured but each user may specify the location for his or her individual needs (e.g., where the box 146 indicates the viewport into the larger viewing area for a user 8). A large viewing area can profitably use other visual cuing as skilled artisans will readily imagine. One resulting advantage is that each tessellated application and/or virtual machine interacts with a visual mapping mechanism so that all of the elements of the tessellated application are able to share visual resources of the user's system (e.g., a mapping mechanism that allows all of the virtual machines to share the visual space and physical display by using X-server on Linux).

Certain other advantages of the invention over the prior art should also be readily apparent. For example, the invention provides various computing applications to users in an entity, e.g., email, photo-editing, word processing, etc., particularly according to user roles, e.g., workplace job descriptions. In turn, the roles have pre-defined computing rights according to established policies defining them. Various other advantages contemplate loading and startup conditions of the applications and mapping viewing areas according to the applications. Libraries, managers, software program products, policy enforcement and corporate governance, are other noteworthy features.

Finally, one of ordinary skill in the art will recognize that additional embodiments are also possible without departing from the teachings of the present invention. Relatively apparent modifications, of course, include combining the various features of one or more figures with the features of one or more of other figures or expanding the system to replicate the embodiments multiple times.

## Claims

1. A method of instantiating a computing environment (10,300) for a user, comprising:
establishing a computing policy for the user according to a role of the user;
defining a library (112) of templates (30-1, 30-2, 30-3), each said template defining a computing configuration (32,34,36) of at least one virtual machine (30) and any application (23) to be executed by the at least one virtual machine; and
configuring a user application (100) from the defined library of templates according to the established computing policy, the user application for use in the computing environment.

2. The method of claim 1, wherein configuring includes tessellating multiple templates (30-1, 30-2, 30-3) from the defined library (112) of templates into the user application (100).

3. The method of claim 1, further including loading (136) the user application (100) into a host environment (134) of the computing environment (130).

4. The method of claim 3, wherein the loading (136) further includes pre-selecting an initial user application.

5. The method of claim 1, further including dividing the computing environment (130) for the user into a host environment (134) and a resource environment (132).

6. The method of claim 1, further including configuring another user application (100-1) from the defined library (112) of templates according to the established computing policy, the user application (100) and the said another user application (100-1) being adapted to be stored in an application library (120).

7. The method of claim 1, wherein the configuring the user application (100) from the defined library (112) of templates according to the established computing policy further includes interrogating various job descriptions of a plurality of possible roles of the user.

8. The method of claim 1:
wherein establishing comprises establishing a computing policy for multiple users of an entity according to a role of each of the multiple users in the entity;
defining said library (112) of templates (30-1, 30-2, 30-3) irrespective of an arrangement or type of physical computing devices (15,15',23) in the user computing environments (10,300); and
wherein configuring comprises selecting certain templates from the defined library of templates into a first user application (100-1) and certain other templates from the defined library of templates into a second user application (100-2) the first and second user applications for use in the user computing environments and each application corresponding to one of the roles of the multiple users, the certain templates and the certain other templates being mutually exclusive or not.

9. The method of claim 8, wherein the selecting includes tessellating multiple templates from the defined library (112) of templates into the first and second user applications (100-1,100-2).

10. The method of claim 8 or claim 9, further including any one or more of the following steps:
- loading (136) the first or second user application (100-1, 100-2) into one of the user computing environments upon startup of one of the physical computing devices (15,15') of the user computing environments;
- storing the first and second user applications in an application library (120);
- mapping a viewing area (140) of one of the physical computing devices of the user computing environments according to the first and second user applications;
- specifying which of the first or second user applications is to be loaded in the user computing environments based on the established computing policy;
- delaying starting the first or second user application until the at least one virtual machine (30) of said each said template (30-1, 30-2) is started.

11. A computing environment for multiple users, comprising:
a first library (112) storing a plurality of templates with each said template defining a computing configuration (32,34,36) of at least one virtual machine (30) and any computing application to be executed by the at least one virtual machine;
a second library (120) the same or different as the first library storing a plurality of applications tessellated from the plurality of templates (30-1, 30-2) according to an established computing policy for the multiple users according to a role of each of the multiple users; and
a workstation (17) for at least one of the multiple users configured to load and start one of the plurality of applications tessellated from the plurality of templates based solely on the role of the at least one of the multiple users.

12. The computing environment of claim 11, further including at least one manager (110,114) overseeing the first or second library (112,120).

13. The computing environment of claim 11, wherein the workstation (17) includes a viewing area (140) mapped to the plurality of applications (100), preferably wherein the viewing area corresponds to a viewing boundary (142) of a monitor or a virtual viewing area within the viewing boundary.

14. A computer program which when executing on a computer performs computer-implemented steps as claimed in any one of claims 1 to 10.

15. The computer program of claim 14, when stored on a computer-readable medium.
